Europäisches Patentamt

**European Patent Office**

**Office européen des brevets**

(19)

(11) Numéro de publication: **0 009 427**
A2

(12) # DEMANDE DE BREVET EUROPEEN

(21) Numéro de dépôt: 79400596.7

(22) Date de dépôt: **29.08.79**

(51) Int. Cl.³: **A 47 J 37/07**

(30) Priorité: **27.09.78 FR 7827596**
**27.09.78 FR 7827597**

(43) Date de publication de la demande: **02.04.80**
**Bulletin 80/7**

(84) Etats contractants désignés: **DE GB IT NL**

(71) Demandeur: **Société dite: Le Creuset, F-02230 Fresnoy Le Grand (FR)**

(72) Inventeur: **Schmitt, Paul, 6, Les Grives, F-78170 La Celle Saint Cloud (FR)**

(74) Mandataire: **Bressand, Georges et al, c/o CABINET LAVOIX 2 Place d'Estienne d'Orves, F-75441 Paris Cedex 09 (FR)**

(54) **Barbecue avec foyer à deux positions.**

(57) Le foyer supérieur 1 du barbecue représenté est monté pivotant au moyen d'un axe 20 porté par la traverse haute 6 d'un châssis 4 en forme d'U. Dans la position horizontale d'utilisation comme grilloir, représentée en trait plein, le foyer 1 est retenu par la gravité au contact de l'extrémité 28 d'une tige mobile 27 verrouillée en 34a. Pour passer à la position d'utilisation comme rôtissoire, représentée en trait mixte, on déverrouille la tige 27 qui, en glissant vers le bas se dégage du foyer 1 qui bascule alors jusqu'à son autre position.

1

## Barbecue avec foyer à deux positions

L'invention a pour objet un barbecue comprenant un foyer articulé sur un support autour d'un axe horizontal, de manière à pouvoir occuper soit une première position horizontale, pour l'utilisation du barbecue comme grilloir, soit une seconde position décalée angulairement par rapport à la première et approximativement verticale, pour l'utilisation du barbecue comme rôtissoire; le foyer étant appliqué et retenu dans ses positions respectives, sous l'effet de la gravité, au contact de l'une ou de l'autre de deux zones d'appui, dont la seconde qui correspond à la seconde position du foyer, est fixe.

Dans les barbecues connus de ce type les deux zones d'appui sont l'une et l'autre fixes et sont disposées de part et d'autre de l'axe d'articulation, de sorte qu'il est nécessaire pour faire passer le foyer de l'une à l'autre position, de saisir à la main une poignée fixée directement sur le foyer, ce qui constitue une manoeuvre qui ne peut être faite commodément que lorsque le foyer est froid.

Pour remédier à cet inconvénient l'invention propose une disposition nouvelle caractérisée en ce que les deux zones d'appui sont disposées d'un même côté de l'axe d'articulation du foyer et en ce que la première zone d'appui définissant la première position horizontale, est escamotable et est constituée par l'extrémité libre d'une tige ou élément analogue, montée mobile sur le support.

Grâce à cet agencement il est possible de changer la position du foyer, lorsque ce dernier est en marche, sans risque de brûlure. Si l'on suppose le foyer dans sa première position, horizontale, le simple retrait de la tige de commande, qui peut être manoeuvrée à distance, assure sous l'effet de la gravité le basculement du foyer jusqu'à sa seconde position, verticale ou légèrement oblique. Inversement, à partir de cette seconde position une poussée exercée sur la tige de commande permet d'amener le foyer en position horizontale, dans laquelle ce dernier peut être immobilisé par des moyens de verrouillage de la tige.

Le porte-broche prévu pour la position verticale ou légèrement oblique du foyer, correspondant à l'utilisation en rôtissoire, est porté par le support qui avantageusement comprend un châssis en forme d'U, dont la traverse située en partie haute sert au montage de l'axe d'articulation du foyer et dont les branches sont repliées à angle aigu en formant deux longerons qui en s'appuyant sur le sol donnent au châssis en U une orientation oblique par rapport à la verticale.

Suivant une autre caractéristique, la tige de commande est avantageusement montée de façon coulissante dans la traverse haute du châssis, au-dessous de l'axe d'articulation du foyer, suivant une orientation perpendiculaire au plan oblique du châssis.

Le porte - broche peut être fixé directement sur les branches du châssis, mais une solution préférée consiste à prévoir un deuxième foyer formant grilloir assujetti dans une position fixe sur le châssis, à un niveau plus bas que la traverse de l'U et supportant lui-même le porte-broche.

L'invention sera explicitée de façon purement indicative au cours de la description qui va suivre, en référence au dessin annexé, dans lequel :

- la Fig. 1 représente, en perspective, un barbecue à deux foyers, dont l'un peut occuper deux positions ;

- la Fig. 2 est une vue partielle de profil du

3

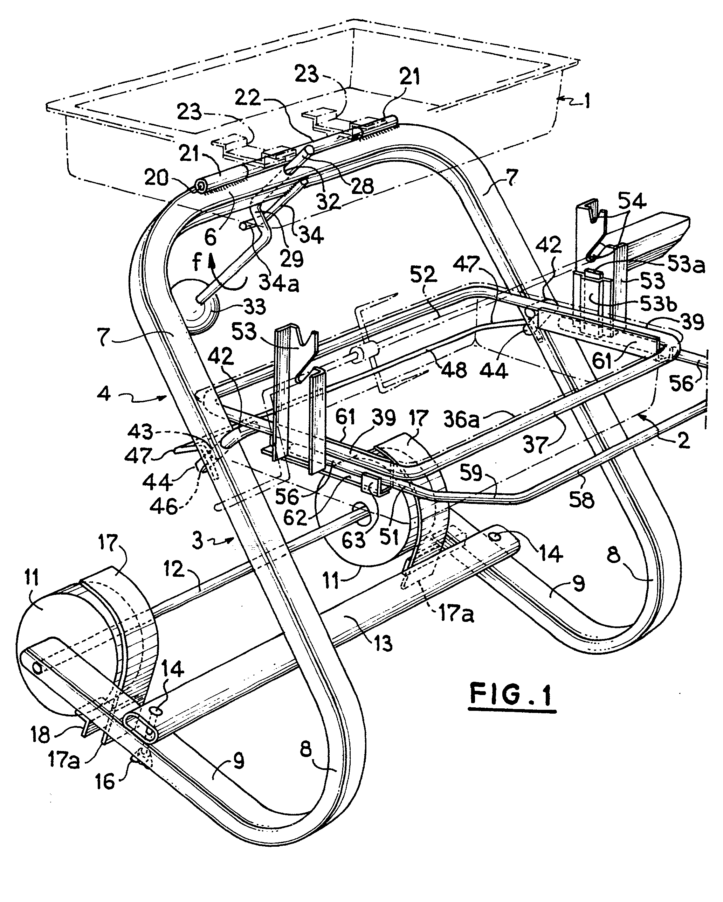

barbecue de la Fig. 1 montrant le dispositif qui commande le changement de position du foyer supérieur;

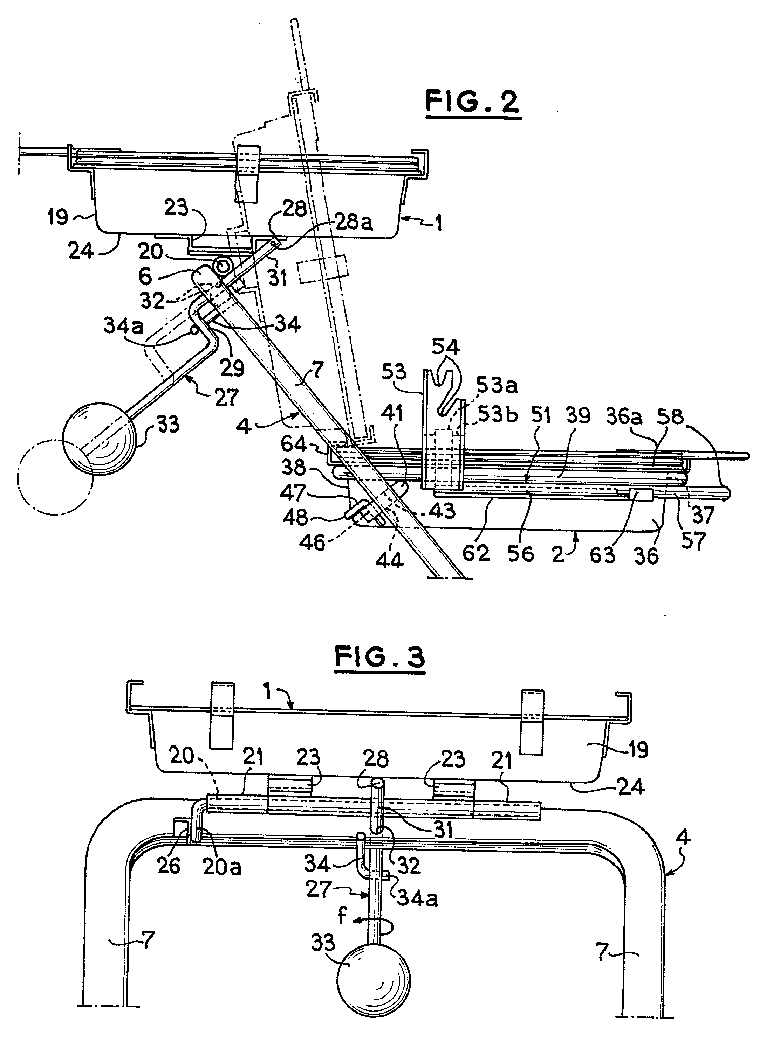

  - la Fig. 3 est une vue de face du foyer supérieur en position horizontale.

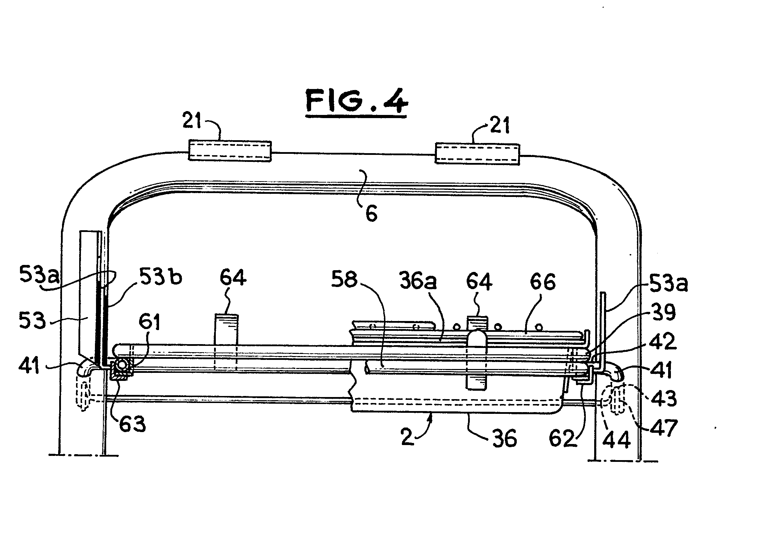

  - la Fig. 4 est une vue de face du foyer inférieur qui supporte le porte-broche coulissant.

  Les deux foyers 1, 2 du barbecue représenté sur la Fig. 1 sont montés sur un support 3 qui comprend un châssis 4 en forme d'U dont la traverse 6 est située en partie haute et dont les branches 7 sont repliées à angle aigu, suivant un arrondi 8, de manière à se prolonger en formant deux longerons 9 qui en s'appuyant sur le sol, d'une part au droit de l'arrondi 8, et d'autre part à l'extrémité opposée par l'intermédiaire de deux roues 11 portées par un essieu 12 monté au bout des longerons, donnent au châssis 4 une orientation oblique par rapport à la verticale. Sur les deux longerons sont fixées, au moyen de boulons 14 et d'écrous 16, les extrémités respectives d'une entretoise 13 qui, comme l'ensemble du support, est formée à partir d'un profilé tubulaire plat. Pour l'immobilisation au sol du barbecue en position de service deux éléments en tôle 17 sont fixés sur les longerons 9, en position adjacente aux roues 11, par l'intermédiaire d'équerres 18, de manière à présenter une extrémité en saillie 17a qui s'ancre dans le sol.

  Le foyer supérieur 1, qui est constitué essentiellement par une cuve rectangulaire 19, est articulé sur la traverse haute 6 au moyen d'une charnière comprenant un axe 20 qui traverse deux noeuds cylindriques espacés 21 soudés sur la traverse 6 et un noeud cylindrique intermédiaire 22 soudé sur la partie centrale de deux ferrures en oméga 23 dont les ailes sont elles-mêmes soudées sur le dessous du fond 24 de la cuve 19. L'axe d'articulation 20 comporte à l'une de ses extrémités un coude 20a qui le retient axialement en coopération avec une butée 26 solidaire de la traverse 6.

L'axe d'articulation 20 est déporté de telle sorte par rapport au centre de gravité du foyer que la gravité tend à faire basculer dans le sens des aiguilles d'une montre (Fig. 2) la cuve 19 qui ne peut être maintenue dans la position horizontale, représentée en trait plein, que par le contact du fond 24 avec un appui situé du même côté que le centre de gravité par rapport à l'axe 20, et qui est constitué par l'extrémité 28 d'une tige mobile 27 verrouillée dans la position d'appui représentée.

La tige 27 a la forme d'une manivelle orientée perpendiculairement au plan du châssis et comprend de part et d'autre d'un coude 29 un segment 31 qui se termine en 28 et qui traverse à contact glissant deux trous en/coïncidence 32 de la traverse 6, et un segment 33 parallèle au segment 31, qui se termine par une poignée de manoeuvre 33, de forme sphérique. Dans la position représentée en trait plein à la Fig. 2 le coude 29, qui est dans un plan parallèle au châssis 4, est appuyé sur la branche libre 34a d'une équerre 34 fixée à la traverse 6, ce qui verrouille la tige 27. En faisant tourner cette tige dans ses portées 32, suivant le sens de la flèche f (Fig. 1 et 3), on dégage le coude 29 de sa position de verrouillage, de sorte que le poids du foyer s'exerçant sur l'extrémité d'appui 28 de la tige 27 auquel peut s'ajouter une légère traction vers le bas appliquée à la poignée 33 provoque le basculement du foyer 1 autour de l'axe 20 jusqu'à la position légèrement inclinée sur la verticale représentée en trait mixte à la Fig. 2, pour laquelle le foyer peut être utilisé en rôtissoire. A partir de cette seconde position le foyer peut être déplacé angulairement jusqu'à sa première position, horizontale, moyennant une poussée vers le haut exercée sur la poignée 33 de la tige 27 dont l'extré-

5

mité 28 appliquée sur le fond 24 du foyer repousse ce dernier à l'encontre de la gravité. La position limite de la course vers le bas de la tige de commande 27 est définie par la butée au contact de la traverse 6 d'une goupille 28a fixée à l'extrémité 28.

Le second foyer 2 est fixé à l'horizontale sur les branches 7 du châssis 4 à une certaine distance au-dessous de la traverse 6. Ce foyer comporte lui aussi une cuve rectangulaire 36, munie d'un rebord 36a qui prend appui sur un cadre rectangulaire 37 dans lequel la cuve est emboîtée. A une petite distance de la paroi arrière 38 de la cuve 36 sont fixées symétriquement sur les bords longitudinaux respectifs 39 du cadre 37 deux équerres 41 qui comportent une branche longitudinale 42 soudée sur le bord 39 correspondant et une branche libre 43 qui traverse perpendiculairement la branche adjacente 7 du châssis 4 et dont l'extrémité dépassante 44 comporte un trou 46 orienté parallèlement au châssis 4. Dans les deux trous 46 sont enfilées et retenues les extrémités respectives 47, conformées à cet effet, d'une tringle transversale 48 disposée de telle sorte qu'elle constitue un organe d'appui pour la paroi arrière de la cuve 36 qui se trouve ainsi maintenue par la gravité en position horizontale.

Comme on le voit sur les Fig. 1 et 2, le foyer bas horizontal 2 sert en quelque sorte de monture pour le porte-broche 51 prévu pour le montage de la broche rotative 52, lorsque le foyer supérieur 1 occupe la position à peu près verticale représentée en trait mixte à la Fig. 2, pour l'utilisation en rôtissoire de ce foyer.

Pour permettre un réglage de la cuisson le porte-broche 51 est agencé de manière à pouvoir coulisser horizontalement, à la façon d'un tiroir, sur le foyer 2. A cet effet il comprend deux montants 53, pourvus d'encoches 54 décalées verticalement servant sélectivement de portées pour la broche 52, et fixés sur les branches parallèles respectives 56 d'un étrier 57 dont la traverse 58, située à l'avant forme une poignée 58 à pans coupés 59 qui peut être tirée ou poussée pour régler la distance séparant la broche 52 du foyer 1. La fixation des montants 53 est séparable en ce sens que sur chaque branche d'étrier 56 est soudée une équerre 53a dont la branche verticale est enfilée dans l'ouverture interne d'un profilé en oméga 53b soudé sur le montant 53 (Fig. 1).

Sur les bords longitudinaux respectifs 39 du cadre 37 sont soudées intérieurement deux cornières 61 comportant une aile horizontale 62 espacée verticalement du bord 39 d'une quantité juste suffisante pour que la branche 56 correspondante de l'étrier 57 puisse être guidée en contact glissant tant avec l'aile de cornière 62 qu'avec le bord 39, ce guidage ayant lieu également au contact de l'aile verticale de la cornière. Les positions extrêmes du porte-broche 51 sont définies respectivement par des butées 63 coopérant avec les montants 53 et par le contact de butée des montants avec les équerres obliques 41.

Dans sa position d'utilisation en rôtissoire le foyer haut 1 est appliqué par la gravité au contact d'une zone d'appui constituée dans l'exemple représenté par les ferrures 64 (Fig. 2) qui servent à retenir la grille 66 du foyer horizontal 2.

7

## REVENDICATIONS

1. Barbecue comprenant un foyer articulé sur un support autour d'un axe horizontal, de manière à pouvoir occuper soit une première position, horizontale, pour l'utilisation du barbecue comme grilloir, soit une seconde position décalée angulairement par rapport à la première et approximativement verticale, pour l'utilisation du barbecue comme rôtissoire, le foyer étant appliqué et retenu dans ses positions respectives, sous l'effet de la gravité, au contact de l'une ou de l'autre de deux zones d'appui, dont la seconde, qui correspond à la seconde position du foyer, est fixe, caractérisé en ce que les deux zones d'appui (28,64) sont disposées d'un même côté de l'axe d'articulation (20) du foyer (1), et en ce que la première zone d'appui (28) définissant la première position, horizontale, est escamotable et est constituée par l'extrémité libre d'une tige (27), ou élément analogue, montée mobile sur le support (3).

2. Barbecue suivant la revendication 1, caractérisé en ce que des moyens sont prévus pour verrouiller la tige (27) dans sa position active pour laquelle son extrémité (28) retient le foyer (1) en position horizontale.

3. Barbecue suivant la revendication 1 ou 2, caractérisé en ce que la tige (27) est mobile en translation.

4. Barbecue suivant la revendication 3, caractérisé en ce que la tige (27) forme une manivelle rotative et coulissante dont la partie coudée (29) peut être retenue par une butée (34a) de manière à assurer le verrouillage de la tige (27).

5. Barbecue suivant l'une des revendications 1 à 4, caractérisé en ce que le porte-broche (51) associé au foyer (1) en position d'utilisation comme rôtissoire est porté par le support (3).

6. Barbecue suivant l'une des revendications 1 à 5, caractérisé en ce que le support (3) comprend un châssis (4) en forme d'U dont la traverse (6), située en partie haute, sert au montage de l'axe d'articulation (20) du foyer (1) et dont les branches (7) sont repliées à angle aigu en formant deux longerons (9) qui en s'appuyant sur le sol donnent au châssis en U (4) une orientation oblique par rapport à la verticale.

7. Barbecue suivant les revendications 5 et 6, caractérisé en ce que le porte-broche (51) est monté sur les branches (7) du châssis en U (4).

8. Barbecue suivant la revendication 7, comportant deux montants agencés pour recevoir une broche rotative caractérisé en ce que les deux montants (53) sont fixés sur les branches parallèles respectives (56) d'un étrier (57) prévu pour être engagé à la manière d'un tiroir dans une monture (2) solidaire du support (3), la traverse (58) de cet étrier constituant une poignée de manoeuvre.

9. Barbecue suivant la revendication 8, caractérisé en ce que la monture constitue une double glissière solidarisée avec le support (3) de l'appareil.

10. Barbecue suivant la revendication 8, caractérisé en ce que l'étrier (57) est monté coulissant sur un second foyer (2) fixé en position horizontale sur le support (3), et utilisable comme grilloir.

11. Barbecue suivant la revendication 10, caractérisé en ce que le second foyer (2) comprend une cuve (36), de forme générale rectangulaire ou carrée, munie d'un rebord (36a) appuyé sur un cadre (37) dans lequel la cuve est emboîtée et qui est fixé au support (3), des moyens étant prévus pour le guidage coulissant au contact des bords longitudinaux (39) du cadre (37) des branches (56) de l'étrier (57).

12. Appareil suivant la revendication 11, caractérisé en ce que les moyens de guidage comprennent deux cornières (61) fixées sur les bords longitudinaux respectifs (39) du cadre (37).

13. Barbecue suivant l'une des revendications 8 et 9, caractérisé en ce que la zone d'appui (64), fixe, du premier foyer (1) en position d'utilisation comme rôtissoire est formée sur le second foyer.

14. Barbecue suivant la revendication 6, caractérisé en ce que la tige mobile (27) est montée dans la traverse (6) du châssis en U (4).

**FIG.1**

**FIG.2**

**FIG.3**

FIG.4